**Europäisches Patentamt**

**European Patent Office**

**Office européen des brevets**

(11) Veröffentlichungsnummer: **0 056 971**
**B1**

(12) **EUROPÄISCHE PATENTSCHRIFT**

(45) Veröffentlichungstag der Patentschrift:
19.12.84

(21) Anmeldenummer: 82100336.5

(22) Anmeldetag: 19.01.82

(51) Int. Cl.³: **C 08 F 212/00,** C 08 F 222/14,
C 09 D 3/74

(54) Verfahren zur Herstellung von Copolymerisaten und Verwendung der erhaltenen Produkte.

(30) Priorität: 22.01.81 DE 3101887

(43) Veröffentlichungstag der Anmeldung:
04.08.82 Patentblatt 82/31

(45) Bekanntmachung des Hinweises auf die Patenterteilung: 19.12.84 Patentblatt 84/51

(84) Benannte Vertragsstaaten:
AT BE CH DE FR GB IT LI NL SE

(56) Entgegenhaltungen:
FR-A- 2 228 790
FR-A- 2 281 411

(73) Patentinhaber: HOECHST AKTIENGESELLSCHAFT
Postfach 80 03 20
D-6230 Frankfurt am Main 80 (DE)

(72) Erfinder: Plum, Helmut, Dr.
Nibelungenstrasse 3
D-6204 Taunusstein (DE)

# 0 056 971

**Beschreibung**

Die Erfindung bezieht sich auf ein Verfahren zur Herstellung von Copolymerisation durch radikalisch initiierte Substanzpolymerisation. Radikalisch initiierte Polymerisationen sind im allgemeinen exotherme Reaktionen ; sie werden deshalb gewöhnlich in Lösung, in Emulsion oder in Suspension durchgeführt. Das Lösungs- oder Verdünnungsmittel erleichtert die Kontrolle der exothermen Reaktion, und die verringerte Viskosität ermöglicht ein leichtes Abführen der Polymerisationswärme durch entsprechendes Rühren.

Auch die Copolymerisation in Substanz ist bekannt. Eine solche Substanzpolymerisation bietet an sich viele Vorteile : Es gibt keine Einschränkungen bei der Verwendung von Lösungs- oder Verdünnungsmitteln ; das Polymerisat läßt sich direkt in lösungsmittelfreien Ansätzen für Überzüge einsetzen, ohne daß es zuerst isoliert werden muß. In der Praxis wird eine Substanzpolymerisation jedoch selten durchgeführt. Während der Substanzpolymerisation steigt die Viskosität beträchtlich an, so daß nicht mehr wirksam gerührt und die Polymerisationswärme nicht mehr vollständig abgeführt werden kann. Je größer der Ansatz ist, desto schwieriger läßt sich die Polymerisation steuern und ein Davonlaufen der Polymerisation verhindern. Um diese Schwierigkeiten zu umgehen, polymerisiert man z. B. in der ersten Stufe bis zu einem mittleren Umsatz und führt dann in einer zweiten Stufe die Polymerisation in geeigneten Vorrichtungen zu Ende. Dieses Verfahren, das jedoch verhältnismäßig umständlich ist, wird z. B. in einer Druckschrift für die Herstellung von Glycidylgruppen aufweisenden Acrylatharzen beschrieben.

In einer anderen Druckschrift wird ebenfalls ein Verfahren zur Herstellung von radikalisch initiierten Substanzpolymerisaten beschrieben. Das Verfahren ist jedoch auf Copolymere aus Acrylmonomeren und ungesättigten Monomeren, vorzugsweise Fumar- und Maleinsäurediester beschränkt. Dabei werden vorzugsweise solche Acrylmonomeren eingesetzt, deren Homopolymerisate Glasumwandlungstemperaturen von − 40 °C oder weniger aufweisen. Die beschriebenen Copolymerisate eignen sich nur als Schmier-, Netz- oder Verlaufmittel oder als Weichmacher.

Eine weitere Veröffentlichung beschreibt die Herstellung eines Acrylharzes durch Copolymerisation in Masse von

1) 0 bis 30 % Acryl- und/oder Methacrylsäure-hydroxylalkylestern,
2) 0 bis 60 % Styrol oder dessen Derivaten,
3) 10 bis 90 % Acryl- und/oder Methacrylsäure-alkylestern,
4) 0 bis 30 % olefinisch ungesättigten Mono- oder Dicarbonsäuren, z. B. Acryl- oder Methacrylsäure, oder Maleinsäurehalbestern, und
5) 10 bis 70 % Monoallyläthern eines dreiwertigen Alkohols.

Hierbei ist die unter 5 genannte Komponente ein wesentlicher Bestandteil für die Copolymerisation, denn bei dieser Verfahrensweise, bei der die Komponente 5) vorgelegt und die übrigen Komponenten bei über 100 °C zugegeben wurden, ist die Copolymerisation in Masse nur mit den Komponenten 1 bis 4 nicht durchführbar. Wie sich aus der Beschreibung dieser Druckschrift ergibt, hat dieses Verfahren jedoch den Nachteil, daß nicht umgesetztes Monomeres zurückbleibt, das im Endprodukt störend wirkt. Dieser Restanteil kann etwa 5 bis 6 Gew.-%, bezogen auf das eingesetzte Monomere 5, betragen.

In der DE-A-2422 043 wurde die Substanz-Copolymerisation von A) Vinyl- oder Vinylidenchlorid oder einem Monocarbonsäurevinylester, dessen Carbonsäurerest keine äthylenische Ungesättigtkeit enthält, B) Vinylaromaten, C) gegebenenfalls Acryl- oder Methacrylsäureestern von ein- oder mehrwertigen Alkoholen und gegebenenfalls weiteren copolymerisierbaren Monomeren beschrieben.

Wenn man eine Ausbeute von über 98 % erhalten will, kann diese Polymerisation jedoch nur innerhalb eines verhältnismäßig engen Temperaturbereiches (von 150 bis 180 °C) durchgeführt werden. Wie die Beispiele dieser Druckschrift zeigen, werden nach diesem Verfahren nur Produkte mit einem verhältnismäßig hohen Molekulargewicht erhalten. Außerdem kann die Komponente A) nur dann unter normalem Druck copolymerisiert werden, wenn die Komponente C) vorhanden ist und zwar wenn ein Ester einer Monocarbonsäure mit über 9 C-Atomen verwendet wird.

Es war daher ein Copolymerisationsverfahren in Substanz erwünscht, das lösungsmittelfreie, relativ niedermolekulare Produkte mit einem geringen Restmonomerengehalt liefert und das sich innerhalb eines breiten Temperaturbereiches durchführen läßt.

Gegenstand der Erfindung ist ein Verfahren zur Herstellung von Copolymerisaten aus Estern einer ungesättigten Carbonsäure mit mindestens einem weiteren ungesättigten Monomeren, das dadurch gekennzeichnet ist, daß folgende Komponenten in einer radikalischen Substanzpolymerisation copolymerisiert werden :

A) 5 bis 60, vorzugsweise 10 bis 30 Gew.-Teile mindestens eines Dialkylesters einer α,β-olefinisch-ungesättigten Dicarbonsäure mit gesättigten einwertigen Alkoholen mit 1 bis 8 C-Atomen,
B) 10 bis 70, vorzugsweise 35 bis 60 Gew.-Teile mindestens eines vinylaromatischen Kohlenwasserstoffs mit einer Vinylgruppe,

2

C) 0 bis 30, vorzugsweise 5 bis 15 Gew.-Teile mindestens eines Glycidylesters einer in α-Stellung verzweigten aliphatischen gesättigten Monocarbonsäure,

D) 0 bis weniger als 51, vorzugsweise 3 bis 10 Gew.-Teile mindestens eines Esters, und/oder Amids einer α,β-olefinisch ungesättigten Monocarbonsäure und/oder eines Anhydrids einer α,β-olefinisch-ungesättigten Dicarbonsäure,

E) 0 bis 40 Gew.-Teile mindestens einer α,β-olefinisch ungesättigten Monocarbonsäure,

wobei die Gesamtmenge der Komponenten A) bis E) 100 Gew.-Teile beträgt, wobei mindestens ein Teil der Komponente A) allein oder in Kombination mit mindestens einem Teil der Komponente C) vorgelegt und bei 140 bis 200 °C ein Gemisch der Komponente B) mit mindestens einer der Komponenten D) und E) und etwaigen restlichen Anteilen der Komponenten A) und/oder C) zusammen mit einem radikalischen Initiator allein oder in Kombination mit einem Regler zugegeben wird, wobei bei Anwesenheit der Komponente C) eine dieser Komponente mindestens äquimolare Menge der Komponente E) eingesetzt wird.

Das erfindungsgemäße Verfahren gestattet die lösungsmittelfreie Herstellung von Copolymerisaten auf einfache Weise, wobei bevorzugt niedermolekulare Produkte mit einem geringen Restmonomerengehalt erhalten werden.

Durch die Vorlage der Komponenten (A) und gegebenenfalls C) wird einmal ein anfänglicher Lösungseffekt erzielt und damit eine gute und rasche Abführung der Reaktionswärme ermöglicht, und zum anderen können auch relativ hohe Polymerisationstemperaturen angewandt werden, die weit über dem Schmelzpunkt des entstehenden Copolymerisats liegen, so daß auch gegen Ende der Polymerisation die Viskosität noch so niedrig ist, daß wirksam gerührt werden kann, was die Kontrolle der Reaktion weiter erleichtert.

Ein Vorteil des erfindungsgemäßen Verfahrens ist dadurch gegeben, daß es infolge der einfachen Verfahrensführung in jedem Reaktionsgefäß, das auch für die Polymerisation in Lösung geeignet ist, durchgeführt werden kann. Dabei läßt sich die auftretende Polymerisationswärme einwandfrei beherrschen. Ein besonderer Vorteil dieses Polymerisationsverfahrens ist eine bessere Ausbeute an Copolymerisat, im Vergleich zur Lösungs-, Emulsions- oder Suspensionspolymerisation, im vorhandenen Reaktionsgefäß. Ein weiterer Vorteil der erfindungsgemäßen Umsetzung liegt darin, daß sie sich ohne Regler, die im allgemeinen giftig und übelriechend sind, durchführen läßt.

Geeignete Komponenten A) sind Malein- und Fumarsäureester, vorzugsweise mit gesättigten einwertigen Alkohole mit 1 bis 8, vorzugsweise 1 bis 4 C-Atomen im Molekül wie Dimethylmaleinat, Diäthylfumarat, Dibutylmaleinat und Dibutylfumarat, einzeln oder im Gemisch.

Als Komponente B) ist in der Regel Styrol, Alkylstyrol, z. B. α-Methylstyrol oder ein Vinyltoluol geeignet, und zwar jeweils einzeln oder im Gemisch. Die Alkylreste haben im allgemeinen 1 bis 3 C-Atome.

Die Komponente C) umfaßt beispielsweise Glycidylester mit 12 bis 14 C-Atomen von α-Monoalkyl- und/oder α,α-Dialkylalkanmonocarbonsäuren, wobei die Säuren also 9 bis 11 C-Atome haben.

Geeignete Ester der Komponente D) sind z. B. Ester der Carbonsäure, vorzugsweise aber Acryl- und Methacrylsäure, mit ein- oder mehrwertigen Alkoholen, vorzugsweise solchen mit 1 bis 18, inbesondere 1 bis 12 C-Atomen wie Methanol, Äthanol, den verschiedenen Butanolen, 2-Äthylhexanol, Laurylalkohol, Stearylalkohol, den verschiedenen Fettalkoholen, wie Sojaölfettalkoholen und dergleichen, Cycloalkylalkoholen, wie Terpenalkoholen, z. B. den verschiedenen Borneolen ; ferner Ester mit mehrwertigen Alkoholen mit z. B. 2 bis 10 C-Atomen, wie Äthylenglykol, Propylenglykol, Butandiol, Trimethylolpropan, oder -äthan, Glycerin. Geeignete Glycidylester sind z. B. Malein- oder Fumarsäure-Diglycidylester, vorzugsweise Glycidylacrylat und Glycidylmethacrylat.

Die Komponente D) umfaßt ferner die Umsetzungsprodukte von a) Glycidylestern von in α-Stellung verzweigten aliphatischen gesättigten Monocarbonsäuren und/oder Glycidyläthern mit b) α,β-olefinisch ungesättigten Carbonsäuren, wie Acryl- und/oder Methacrylsäure oder dergleichen.

Geeignete Amide sind z. B. Acryl- oder Methacrylamid. Als Anhydride eignen sich z. B. Maleinsäure-Dimethylmaleinsäure- und/oder Citraconsäureanhydrid.

Die Substanzen der Komponente D) können sowohl einzeln als auch im Gemisch eingesetzt werden. Falls Alkylester einwertiger Alkohole vorhanden sind, können diese auch als alleiniger Bestandteil der Komponente D) eingesetzt werden, doch ist dies nicht die bevorzugte Ausführungsform. In der Regel wird man diese Alkylester zusammen mit Verbindungen mit funktionellen Gruppen, z. B. Hydroxyalkylestern oder Glycidylverbindungen, einsetzen. Es ist auch möglich, diese Alkylester gleichzeitig mit der Komponente E), d. h. mit funktionellen COOH-Gruppen einzusetzen, wobei ebenfalls Copolymerisate mit günstigen Eigenschaften erhalten werden.

Als Komponente E) sind beispielsweise Acrylsäure, Methacrylsäure, Crotonsäure, Halbester olefinisch ungesättigter Dicarbonsäuren, deren Alkoholkomponente im allgemeinen 1 bis 18 C-Atome hat und z. B. den ein- und/oder mehrwertigen Alkoholen, wie sie unter Komponente D) genannt sind, entspricht, und ungesättigte Fettsäuren mit 8 bis 22 C-Atomen geeignet. Im einzelnen seien z. B. genannt Elaeostearinsäure, Licansäure, Linolensäure, Linolsäure, Ölsäure, Erucasäure, Arachidonsäure, Clupanodonsäure, Ricinenfettsäure.

Für das erfindungsgemäße Verfahren kommt jede radikalbildende Verbindung als Polymerisationsinitiator in Frage. Derartige Initiatoren sind z. B. aliphatische Azoverbindungen wie Azoisobuttersäurenitril, Peroxide, wie Diacylperoxide, z. B. Di-benzoylperoxid, Dialkylperoxide, wie Di-tert.-butylperoxid oder Dialkylhydroperoxide, wie tert.-Butylhydroperoxid. Besonders bevorzugt ist Di-tert.-butylperoxid. Deren Anteil beträgt im allgemeinen 0,5 bis 2,5, vorzugsweise 0,5 bis 1,9 Gew.-% bezogen auf das Gesamtgewicht der Ausgangskomponenten.

Der Initiator kann zusammen mit den Monomeren allmählich zugegeben werden. Ein Teil des Initiators kann auch gleich am Anfang mit der Komponente A und ein anderer Teil mit den allmählich zugegebenen Monomeren in den Reaktor eingegeben werden. Nachdem die gesammten Monomeren eingebracht worden sind, ist in der Regel keine zusätzliche Initiatorzugabe erforderlich, um die Polymerisation zu Ende zu führen. In einigen Fällen ist es jedoch auch möglich, eine zusätzliche Menge von 0,1 bis 1,0 Gew.-% Initiator in Intervallen zuzugeben, nachdem die Monomerzufuhr abgeschlossen ist, jedoch soll auch in einem solchen Fall die Menge des Initiators vorzugsweise nicht mehr als 2,5 Gew.-% betragen.

Die Polymerisationstemperatur hängt von dem jeweils gewünschten Molekulargewicht ab und liegt wesentlich über dem Schmelzpunkt des resultierenden Copolymerisats, vorzugsweise zwischen 150 und 190 °C, insbesondere zwischen 160 und 185 °C. Bei der Polymerisationstemperatur ist das Copolymerisat also flüssig und läßt sich leicht rühren. Nach der Polymerisation kann es gegebenenfalls verdünnt oder ohne Lösungsmittel abgekühlt werden, wobei es zu einer festen Masse erstarrt und zerkleinert werden kann.

Die erfindungsgemäß erhaltenen Produkte eignen sich als solche oder in Form von Lösungen als Bindemittel, insbesondere zur Herstellung von Überzügen, Druckfarben und Klebstoffen.

Geeignete Lösungsmittel für die erfindungsgemäß erhaltenen Produkte sind z. B. aromatische Kohlenwasserstoffe, wie Toluol, Xylol, Monocarbonsäureester, wie Äthylacetat Butylacetat, Äthylenglykolmonoäthylätheracetat, das entsprechende Methylätheracetat oder dergleichen.

Copolymerisate mit einem Gehalt von mindestens 5 Gew.-% der Komponente E) können ganz oder teilweise durch Ammoniak und/oder Amine neutralisiert und in Wasser gelöst werden.

Copolymere, in denen mindestens ein Teil der Komponente D) ein hydroxylalkylgruppenhaltiger Ester ist, eignen sich bevorzugt zur Vernetzung mit Polyisocyanaten bei Raumtemperatur. Hierfür geeignete Isocyanate sind aliphatische, cycloaliphatische und aromatische Polyisocyanate, wie Hexamethylendiisocyanat, Isophorondiisocyanat oder Toluylen-2,4-diisocyanat, ferner die weiter unten genannten Isocyanate, jeweils einzeln oder im Gemisch. Die Härtung kann durch Zusatz von organischen Zinnverbindungen wie Dibutylzinndilaurat, Dibutylzinndiacetat, Dibutyloxozinn und gegebenenfalls tertiären Aminen, vorzugsweise Diäthyläthanolamin, katalysiert werden. Für eine Härtung bei erhöhter Temperatur eignen sich auch verkappte Polyisocyanate, Polycarbonsäuren und/oder deren Anhydride.

Vorzugsweise werden Urethangruppen und/oder Biuretgruppen enthaltende Polyisocyanate verwendet, die aus den Diisocyanaten 2,4- und 2,6-Toluylendiisocyanat, Hexamethylendiisocyanat-1,6 Diphenylmethan-4,4'-diisocyanat und/oder 3-Isocyanatomethyl-3,5,5-trimethylcyclohexylisocyanat gebildet werden. Besonders bevorzugt ist ein Biuretgruppen enthaltendes Polyisocyanat, das aus 3 Molen Hexamethylendiisocyanat und einem Mol Wasser entsteht.

Geeignete Vernetzer für solche erfindungsgemäße Produkte, die OH-Gruppen enthalten, sind ferner Aminoplastharze und/oder Phenolharze, die in Gegenwart von Säuren, z. B. p-Toluolsulfonsäure aushärten. Die Heißhärtung kann in üblicher Weise bei Temperaturen von 120 bis 200 °C, z. B. in 10 bis 30 Minuten vorgenommen werden.

Die hydroxylgruppenhaltigen Produkte eignen sich in Verbindung mit Polycarbonsäureanhydriden gut zur Herstellung von Pulverlacken. Sie lassen sich auch zur Umsetzung mit Polycarbonsäureanhydriden und zur Weiterverwendung der so erhaltenen Produkte als Härter für verschiedene Kunstharze, insbesondere Epoxydharze, einsetzen.

Von besonderem Interesse ist die Verwendung der erfindungsgemäß hergestellten hydroxylgruppenhaltigen Produkte zusammen mit speziellen Polycarbonsäureteilestern, wie sie z. B. in der deutschen Patentanmeldung P 27 07 018 beschrieben sind, oder zusammen mit Einheiten von Polycarbonsäuren bzw. deren Anhydriden oder Esteranhydriden, wie sie z. B. in den deutschen Patentanmeldungen P 27 23 492, P 27 54 399.3 und P 25 56 182.4 beschrieben sind, zur Härtung von Polyepoxyden. Bevorzugte Polycarbonsäureeinheiten sind z. B. Polyanhydride, die durch Umsetzung von Polycarbonsäureanhydriden mit mindestens zweiwertigen Alkoholen und durch mindestens teilweise Hydrolyse und/oder durch Umsetzung von OH-Gruppen enthaltenden oligomeren und/oder polymeren Verbindungen, die z. B. auch Kondensationsprodukte sein können, mit Polycarbonsäureverbindungen, z. B. Anhydriden von mindestens vierwertigen Carbonsäuren unter Einbau dieser Säureverbindungen in den Seitenketten der OH-Verbindungen hergestellt worden sind, vergleiche die deutsche Patentanmeldung P 27 54 399.3. Diese Systeme sind wegen ihrer hohen Reaktivität, insbesondere für eine Kalthärtung interessant.

Copolymerisate, in denen mindestens ein Teil der Komponente D) ein ungesättigter Glycidylester ist, eignen sich zur Vernetzung mit Aminen, insbesondere aber mit Polycarbonsäureeinheiten, z. B. Polycarbonsäuren, Polycarbonsäureanhydriden und Polyestern mit endständiger Carboxylgruppe. Dies gilt vor allem für die Härtung bei erhöhter Temperatur.

Von besonderem Interesse ist die Verwendung dieser glycidylgruppenhaltigen Produkte in Verbindung mit den Polycarbonsäureeinheiten zur Herstellung von Pulverlacken. Die Härtung kann gegebenenfalls durch Zusatz von üblichen Katalysatoren wie Zinnoctoat, tertiären Phosphinen, Phosphoniumsalzen, tertiären Aminen, Ammoniumsalzen sowie Lithiumsalzen beschleunigt werden.

Nach einer weiteren Ausführungsform der Erfindung kann ein erfindungsgemäß hergestelltes Copolymerisat, das noch freie COOH-Gruppen von der Komponente E) enthält, mit Triglycidylisocyanurat gehärtet werden.

In den Beispielen bedeutet % jeweils Gewichts-% und T Gewichtsteil.

Beispiele

I. Herstellung der Copolymerisate

In einem mit Rührwerk, Inertgas Einleitung, Heiz- und Kühlsystem und einer Zugabeeinrichtung ausgestatteten Reaktor werden die Komponenten A) und gegebenenfalls C) vorgelegt und auf Polymerisationstemperatur erhitzt. Bei dieser Temperatur wird ein Gemisch aus den Komponenten B) und D) und gegebenenfalls E) sowie einem Initiator zugegeben. Anschließend wird nachpolymerisiert, bis ein Umsatz von mindestens 98 % erreicht ist.

Die Komponenten, deren Anteile, die Reaktionsbedingungen und Kennzahlen der Produkte ergeben sich aus nachstehender Übersicht.

| Beispiel | Vorlage Komponenten A (Maleinsäuredimethylester) % + C % | | Komponenten B, D und E % + Initiator | Temperatur °C | Polym. Zeit h | Kennzahlen Produkt |
|---|---|---|---|---|---|---|
| 1 | 20,8 | 45,0 | Styrol | 180 | 6 | Epoxydzahl 2,1 |
| | | 14,7 | Methylmethacrylat | | | |
| | | 19,0 | Glycidylmethacrylat | | | |
| | | 0,5 | di-tert.-Butylperoxid | | | |
| 2 | 16,0 | 55,0 | Styrol | 180 | 6 | OH-Zahl 110 |
| | | 2,4 | Methylmethacrylat | | | |
| | | 25,4 | Hydroxyäthylmethacrylat | | | |
| | | 1,0 | di-tert.-Butylperoxid | | | |
| 3 | 29,4 | 50,6 | Styrol | 180 | 6 | Säurezahl 147 |
| | | 19 | Acrylsäure | | | |
| | | 1 | Di-tert.-Butylperoxid | | | |
| 4 | 13 + 12,25 gesättigter Glycidylester | 20 | Styrol | 160 | 9 | OH-Zahl 140 Säurezahl 5 Viskosität (50 % Xylol/20 °C) 1 400 mPa · s |
| | | 26 | Hydroxyäthylmethacrylat | | | |
| | | 24,75 | Methylmethacrylat | | | |
| | | 3,6 | Acrylsäure | | | |
| | | 0,5 | Di-tert.-Butylperoxid | | | |
| 5 | 15,35 | 45,02 | Styrol | 180 | 6 | Epoxydzahl 1,6 |
| | | 24,02 | Isobornylmethacrylat | | | |
| | | 15,11 | Glycidylmethacrylat | | | |
| | | 0,5 | Di-tert.-Butylperoxid | | | |
| 6 | 15 | 48 | Styrol | 190 | 8 | OH-Zahl 117 Säurezahl 4 Viskosität (50 % Äthylenglykolmonoäthylätheracetat) 2 100 mPa · s |
| | | 26 | Hydroxyäthylmethacrylat | | | |
| | | 10 | Acrylamid | | | |
| | | 1 | Di-tert.-Butylperoxyd | | | |

## II. Herstellung der Lacke

Aus den nach Beispielen 2, 4 und 6 hergestellten Festharzen wurden 60 %ige Lösungen in einem Lösungsmittelgemisch aus 2 T Xylol und 1 T Äthylenglykolmonoäthylätheracetat hergestellt. Mit diesen Lösungen wurden entsprechend den folgenden Formulierungen Lacke angefertigt, wobei die Zahlenwerte Gewichsteile bedeuten.

| Beispiel | 2 | 4 | 6 |
|---|---|---|---|
| Polymerisat-Lösung | 167 | 167 | 167 |
| Titandioxyd | 106,20 | 115,9 | 110,6 |
| Dibutylzinndilaurat (1 %ig in Xylol) | 0,55 | 0,55 | 0,55 |
| Diäthyläthanolamin | 0,90 | 0,90 | 0,90 |
| Siliconöl (1 %ig in Xylol) | 2,30 | 2,30 | 2,30 |
| Umsetzungsprodukt aus Hexamethylendiisocyanat und Wasser (75 %ig in Äthylenglykolmonoäthylätheracetat) | 43,60 | 59,80 | 51,00 |

## III. Lacktechnische Prüfung

Die Lacke wurden mit einem Lösungsmittelgemisch aus Xylol, einem aromatischen Kohlenwasserstoffgemische (Siedebereich 165 bis 175 °C), Butylacetat und Äthylenglykolmonoäthylätheracetat (Gewichtsverhältnis 40 : 25 : 20 : 15) auf eine Viskosität von 50 s (DIN 53 211/20 °C) eingestellt und dann in einer Naßschichtdicke von 100 μm auf Glasplatten und Stahlbleche aufgezogen.

Zum Bestimmen der Staubtrocknung wurde Reflexionsperlen mit einem Durchmesser von 0,1 bis 0,4 mm mittels einer Pipette über eine Breite von 5 mm auf den Lackfilm aufgetragen. Danach wurde die mit Lack beschichtete Glasplatte schräg gestellt und abgeklopft. Wenn alle Perlen abfielen, war der Film staubtrocken.

Die Ergebnisse der lacktechnischen Prüfung sind in der folgenden Tabelle zusammengestellt. Darin bedeuten a) die Härtung bei Raumtemperatur und b) eine 30 Minuten lange Härtung bei 80 °C. Die Xylolbeständigkeit, die Erichsentiefung und der Glanz wurden nach 10 Tagen gemessen.

| Beispiel | 2 | | 4 | | 6 | |
|---|---|---|---|---|---|---|
| Härtung | a | b | a | b | a | b |
| Staubtrocken min | 12 | | 11 | | 29 | |
| Pendelhärte nach (König) (DIN 53 157) nach | | | | | | |
| 2 h | 10 | | 9 | | 27 | |
| 4 h | 14 | | 12 | | 47 | |
| 6 h | 16 | | 17 | | 67 | |
| 24 h | 61 | 176 | 58 | 154 | 140 | 184 |
| Xylolbeständigkeit min | 30 | 30 | 30 | 30 | 30 | 30 |
| Erichsentiefung mm (DIN 53 156) | 9,4 | 9,5 | 9,3 | 8,6 | 8,2 | 7,3 |
| Glanz nach Lange 60° Winkel | 128 | 128 | 116 | 116 | 118 | 120 |

## IV. Diskussion der Ergebnisse

Wie aus vorstehender Tabelle ersichtlich, trocknen die Filme sehr schnell und zeigen gute mechanische Eigenschaften und gute Chemikalienbeständigkeit, insbesondere gegenüber Xylol.

**Ansprüche**

1. Verfahren zur Herstellung von Copolymerisaten aus Estern einer ungesättigten Carbonsäure mit mindestens einem weiteren ungesättigten Monomeren, dadurch gekennzeichnet, daß folgende Komponenten in einer radikalischen Substanzpolymerisation copolymerisiert werden :

A) 5 bis 60, vorzugsweise 10 bis 30, Gew.-Teile mindestens eines Dialkylesters einer α,β-olefinisch-ungesättigten Dicarbonsäure mit gesättigten einwertigen Alkoholen mit 1 bis 8 C-Atomen,

B) 10 bis 70, vorzugsweise 35 bis 60, Gew.-Teile mindestens eines vinylaromatischen Kohlenwasserstoffs mit einer Vinylgruppe,

C) 0 bis 30 Gew.-Teile mindestens eines Glycidylesters einer in α-Stellung verzweigten aliphatischen gesättigten Monocarbonsäure,

D) 0 bis weniger als 51 Gew.-Teile mindestens eines Esters und/oder Amids einer α,β-olefinisch ungesättigten Monocarbonsäure und/oder eines Anhydrids einer α,β-olefinisch-ungesättigten Dicarbonsäure,

E) 0 bis 40 Gew.-Teile mindestens einer α,β-olefinisch ungesättigten Monocarbonsäure,

wobei die Gesamtmenge der Komponenten A) bis E) 100 Gew.-Teile beträgt, und wobei mindestens ein Teil der Komponente A) allein oder in Kombination mit mindestens einem Teil der Komponente C) vorgelegt und bei 140 bis 200 °C ein Gemisch der Komponente B) mit mindestens einer der Komponenten D) und E) und etwaigen restlichen Anteilen der Komponenten A) und/oder C) zusammen mit einem radikalischen Initiator allein oder in Kombination mit einem Regler zugegeben wird, wobei bei Anwesenheit der Komponente C) eine dieser Komponente mindestens äquimolare Menge der Komponente E) eingesetzt wird.

2. Verfahren nach Anspruch 1, dadurch gekennzeichnet, daß als Komponente A) ein Dialkylester der Malein- und/oder Fumarsäure mit 1 bis 4 C-Atomen in den Estergruppen umgesetzt wird.

3. Verfahren nach Anspruch 1 oder 2, dadurch gekennzeichnet, daß die Komponente D) in Form mindestens eines Acryl- und/oder Methacrylsäureesters eines einwertigen Alkohols mit 1 bis 18, vorzugsweise 1 bis 12 C-Atomen und/oder eines mehrwertigen Alkohols und/oder eines Glycidylacrylats und/oder -methacrylats und/oder eines Additionsprodukts einer α,β-olefinisch ungesättigten Carbonsäure an eine Monoglycidylverbindung umgesetzt wird.

4. Verfahren nach einem oder mehreren der Ansprüche 1 bis 3, dadurch gekennzeichnet, daß der Initiator in einem Gesamtanteil von 0,5 bis 2,5, vorzugsweise 0,5 bis 1,9 Gew.-%, bezogen auf das Gesamtgewicht der Ausgangskomponenten, eingesetzt wird.

5. Verfahren nach einem oder mehreren der Ansprüche 1 bis 4, dadurch gekennzeichnet, daß die Copolymerisate mit einem Anteil von mindestens 5 Gew.-% der Komponente E) hergestellt und zumindest teilweise mit Ammoniak und/oder Aminen neutralisiert werden.

6. Verwendung der nach dem Verfahren gemäß einem oder mehreren der Ansprüche 1 bis 5, erhaltenen Copolymerisate als Bindemittel, insbesondere in Form von Pulverlack, zur Herstellung von Überzügen.

7. Verwendung nach Anspruch 6, dadurch gekennzeichnet, daß das Copolymerisat, dessen Komponente D) wenigstens zum Teil aus einem Hydroxyalkylester besteht, in Kombination mit Polyisocyanat allein oder zusammen mit organischen Zinnverbindungen und/oder tertiären Aminen verwendet wird.

8. Verwendung nach Anspruch 6 oder 7, dadurch gekennzeichnet, daß zur Herstellung von wärmegehärteten Überzügen die nach dem Verfahrengemäß einem oder mehrerer der Ansprüche 1 bis 5 erhaltenen, Hydroxyalkylgruppen aufweisenden Copolymerisate zusammen mit einem Härter in Form von — gegebenenfalls verkappten — Polyisocyanaten, Polycarbonsäuren und/oder Anhydriden, Amin- oder Phenolharzen eingesetzt werden.

9. Verwendung nach Anspruch 6 oder 7, dadurch gekennzeichnet, daß ein Copolymerisat, dessen Komponente D) zumindest teilweise auf der Basis von Glycidylestern aufgebaut ist, mit Polycarbonsäureeinheiten gehärtet wird oder daß ein Copolymerisat, das noch freie COOH-Gruppen von der Komponente E) enthält, mit Triglycidylisocyanurat gehärtet wird.

10. Verwendung nach Anspruch 7, dadurch gekennzeichnet, daß der Überzug mit Polyisocyanaten bei Raumtemperatur gehärtet wird.

11. Copolymerisate aus

A) 5 bis 60 Gew.-Teilen mindestens eines Dialkylesters einer α,β-olefinisch-ungesättigten Dicarbonsäure mit gesättigten einwertigen Alkoholen mit 1 bis 8 C-Atomen,

B) 10 bis 70 Gew.-Teilen mindestens eines vinylaromatischen Kohlenwasserstoffs mit einer Vinylgruppe,

C) 0 bis 30 Gew.-Teilen mindestens eines Glycidylesters einer in α-Stellung verzweigten aliphatischen gesättigten Monocarbonsäure,

D) 0 bis weniger als 51 Gew.-Teilen mindestens eines Esters und/oder Amids einer α,β-olefinisch-ungesättigten Monocarbonsäure und/oder eines Anhydrids einer α,β-olefinisch-ungesättigten Dicarbonsäure,

E) 0 bis 40 Gew.-Teilen mindestens einer α,β-olefinisch-üngesättigten Monocarbonsäure,

wobei die Gesamtmenge der Komponenten A) bis E) 100 Gew.-Teile beträgt.


## Claims

1. A process for preparing copolymers derived from esters of an unsaturated carboxylic acid with at least one other unsaturated monomer, characterized in that the following components are copolymerised in radical substance polymerisation :

A) 5 to 60, preferably 10 to 30, parts by weight of at least one dialkylester of an $\alpha,\beta$-olefinically unsaturated dicarboxylic acid with saturated monohydric alcohols having 1 to 8 carbon atoms,

B) 10 to 70, preferably 35 to 60, parts by weight of at least one vinyl aromatic hydrocarbon having one vinyl group,

C) 0 to 30 parts by weight of at least one glycidyl ester of an aliphatic saturated monocarboxylic acid branched in the $\alpha$-position,

D) 0 to less than 51 parts by weight of at least one ester and/or amide of an $\alpha,\beta$-olefinically unsaturated monocarboxylic acid and/or an anhydride of an $\alpha,\beta$-olefinically unsaturated dicarboxylic acid,

E) 0 to 40 parts by weight of at least one $\alpha,\beta$-olefinically unsaturated monocarboxylic acid,

the sum of components A) to E) being 100 parts by weight, whilst at least a part of component A) is at first introduced into the reaction vessel alone or in combination with at least a part of component C) and a mixture of component B) with at least one of components D) and E) and any remaining parts of components A) and/or C) is added at 140 to 200 °C together with a radical initiator, alone or in conjunction with a regulator, and if component C) is present, at least an equimolar quantity of component E) is used, referred to component C).

2. A process as claimed in claim 1, characterised in that a dialkyl ester of maleic and/or fumaric acid with 1 to 4 carbon atoms in the ester groups is reacted as component A).

3. A process as claimed in claim 1 or 2, characterised in that component D) is reacted in the form of at least one acrylic and/or methacrylic acid ester of a monohydric alcohol with 1 to 18, preferably 1 to 12 carbon atoms and/or a polyhydric alcohol and/or a glycidyl acrylate and/or methacrylate and/or an addition product of an $\alpha,\beta$-olefinically unsaturated carboxylic acid to a monoglycidyl compound.

4. A process as claimed in one or more of claims 1 to 3, characterised in that the initiator is used in a total amount of from 0.5 to 2.5, preferably 0.5 to 1.9 % by weight based on the total weight of the starting components.

5. A process as claimed in one or more of claims 1 to 4, characterised in that the copolymers are prepared with a proportion of at least 5 % by weight of component E) and are at least partially neutralised with ammonia and/or amines.

6. The use of the copolymers obtained according to the process according to one or more of the claims to 5, are binders, particularly in the form of powdered coating compositions, for the preparation of coatings.

7. The use as claimed in claim 6, characterised in that the copolymer wherein component D) consists at least partly of a hydroxyalkyl ester is used in conjunction with polyisocyanate on its own or together with organic tin compounds and/or tertiary amines.

8. The use as claimed in claim 6 or 7, characterised in that, for the preparation of heat-hardened coatings, the copolymers containing hydroxyalkyl groups and obtained according to the process as claimed in one or more of claims 1 to 5 are used together with a hardener, in the form of optionally blocked polyisocyanates, polycarboxylic acids and/or anhydrides, amino or phenolic resins.

9. The use as claimed in claim 6 or 7, characterised in that a copolymer wherein component D) is at least partially based on glycidyl esters is cured with polycarboxylic acid units or in that a copolymer which still contains free COOH groups from component E) is cured with triglycidyl isocyanurate.

10. The use as claimed in claim 7, characterized in that the coating is hardened by polyisocyanates at ambient temperature.

11. Copolymers derived from

A) 5 to 60 parts by weight of at least one dialkyl ester of an $\alpha,\beta$-olefinically unsaturated dicarboxylic acid with saturated monohydric alcohols having 1 to 8 carbon atoms,

B) 10 to 70 parts by weight of at least one vinyl aromatic hydrocarbon having one vinyl group,

C) 0 to 30 parts by weight of at least one glycidyl ester of an aliphatic saturated monocarboxylic acid branched in $\alpha$-position,

D) 0 to less than 51 parts by weight of at least one ester and/or amide of an $\alpha,\beta$-olefinically unsaturated monocarboxylic acid and/or an anhydride of an $\alpha,\beta$-olefinically unsaturated dicarboxylic acid,

E) 0 to 40 parts by weight of at least one $\alpha,\beta$-olefinically unsaturated monocarboxylic acid,

the sum of components A) to E) being 100 parts by weight.

**Revendications**

1. Procédé pour la préparation de copolymères d'esters d'un acide carboxylique insaturé ayant au moins un monomère insaturé supplémentaire, caractérisé en ce que les composants suivants sont copolymérisés dans une polymérisation radicalaire en masse :

A) 5 à 60, de préférence 10 à 30 parties en poids d'au moins un ester dialkylique d'un acide dicarboxylique à insaturation α,β-oléfinique avec des monoalcools saturés à 1 à 8 atomes de carbone,

B) 10 à 70, de préférence 35 à 60 parties en poids d'au moins un hydrocarbure vinyl-aromatique ayant un groupe vinyle,

C) 0 à 30 parties en poids d'au moins un ester glycidylique d'un acide monocarboxylique saturé aliphatique ramifié en position α,

D) 0 à moins de 51 parties en poids d'au moins un ester et/ou un amide d'un acide monocarboxylique à insaturation α,β-oléfinique et/ou d'un anhydride d'un acide dicarboxylique à insaturation α,β-oléfinique,

E) 0 à 40 parties en poids d'au moins un acide monocarboxylique à insaturation α,β-oléfinique,

où la quantité totale des composants A) à E) est de 100 parties en poids, et où on a au départ au moins une partie du composant A), seul ou en combinaison avec au moins une partie du composant C), et où, à 140 à 200 °C, on ajoute un mélange du composant B) et d'au moins l'un des composants D) et E), et les parties éventuellement résiduelles des composants A) et/ou C), en même temps qu'un amorceur radicalaire, seul ou en combinaison avec un régulateur, ce à l'occasion de quoi on utilise, en présence du composant C), une quantité du composant E) au moins équimolaire de ce composant.

2. Procédé selon la revendication 1, caractérisé en ce qu'on fait réagir en tant que composant A) un ester dialkylique de l'acide maléique et/ou fumarique ayant 1 à 4 atomes de carbone dans les groupes ester.

3. Procédé selon l'une quelconque des revendications 1 ou 2, caractérisé en ce que le composant D) est mis à réagir sous la forme d'au moins un ester de l'acide acrylique et/ou méthacrylique d'un monoalcool à 1 à 18, de préférence 1 à 12 atomes de carbone et/ou d'un polyalcool et/ou d'un acrylate et/ou méthacrylate de glycidyle et/ou d'un produit d'addition d'un acide carboxylique à insaturation α,β-oléfinique sur un composé monoglycidylique.

4. Procédé selon l'une quelconque des revendications 1 à 3, caractérisé en ce que l'amorceur est utilisé selon un pourcentage total de 0,5 à 2,5, de préférence 0,5 à 1,9 % en poids par rapport au poids total des composants de départ.

5. Procédé selon l'une quelconque des revendications 1 à 4, caractérisé en ce que les copolymères sont préparés avec un pourcentage d'au moins 5 % en poids du composant E) et sont neutralisés, au moins en partie, par de l'ammoniac et/ou des amines.

6. Utilisation des copolymères obtenus par le procédé selon l'une quelconque des revendications 1 à 5 en tant que liant, en particulier sous la forme d'une peinture en poudre, pour la préparation de revêtements.

7. Utilisation selon la revendication 6, caractérisée en ce que le copolymère, dont le composant D) est constitué, au moins en partie, d'un ester hydroxyalkylique, est utilisé en combinaison avec un polyisocyanate, seul ou en même temps que des composés organiques de l'étain et/ou des amines tertiaires.

8. Utilisation selon l'une quelconque des revendications 6 ou 7, caractérisée en ce que, pour la préparation de revêtements durcis à la chaleur, on utilise les copolymères préparés par le procédé selon l'une quelconque des revendications 1 à 5 et contenant des groupes hydroxyalkyles, en même temps qu'un durcisseur sous la forme de polyisocyanates éventuellement bloqués, acides polycarboxyliques et/ou anhydrides, résines d'amines ou phénoliques.

9. Utilisation selon l'une quelconque des revendications 6 ou 7, caractérisée en ce qu'un copolymère, dont le composant D) est constitué au moins en partie à base d'esters glycidyliques, est durci avec des unités d'acides polycarboxyliques, ou qu'un copolymère, qui contient encore des groupes COOH libres du composant E), est durci à l'aide d'isocyanurate de triglycidyle.

10. Utilisation selon la revendication 7, caractérisée en ce que le revêtement contenant les polyisocyanates est durci à la température ambiante.

11. Copolymères, constitués

A) de 5 à 60 parties en poids d'au moins un ester dialkylique d'un acide dicarboxylique à insaturation α,β-oléfinique avec des monoalcools saturés à 1 à 8 atomes de carbone,

B) de 10 à 70 parties en poids d'au moins un hydrocarbure vinyl-aromatique avec un groupe vinyle,

C) de 0 à 30 parties en poids d'au moins un ester glycidylique d'un acide monocarboxylique saturé aliphatique, ramifié en position α,

D) de 0 à moins de 51 parties en poids d'au moins un ester et/ou un amide d'un acide monocarboxylique à insaturation α,β-oléfinique et/ou d'un anhydride d'un acide dicarboxylique à insaturation α,β-oléfinique,

E) de 0 à 40 parties en poids d'au moins un acide monocarboxylique à insaturation α,β-oléfinique,

où la quantité totale des composants A) à E) est de 100 parties en poids.